# EUROPÄISCHE PATENTSCHRIFT

(11) **EP 1 894 463 B1**
(45) Veröffentlichungstag und Bekanntmachung des Hinweises auf die Patenterteilung: **02.01.2013**
(21) Anmeldenummer: 07110454.1
(22) Anmeldetag: 18.06.2007
(51) Int. Cl.: A01D 43/08

(54) **Landwirtschaftliche Erntemaschine mit einer Überladeeinrichtung**
Agricultural harvester with an excess load device
Moissonneuse agricole dotée d'un dispositif de surcharge

(30) Priorität: 28.08.2006 DE 102006040080
(43) Veröffentlichungstag der Anmeldung: 05.03.2008
(73) Patentinhaber: CLAAS Selbstfahrende Erntemaschinen GmbH, 33428 Harsewinkel (DE)
(72) Erfinder: Haffert, Dr., Andreas, 33334 Gütersloh (DE); Frerichs, Ludger, Dr., 48336 Sassenberg (DE); Erdmann, Hubert, 33739 Bielefeld (DE)

(56) Entgegenhaltungen:
- EP-A- 1 393 613
- EP-A- 1 405 555
- EP-A- 1 468 598
- EP-A- 1 618 777
- DE-A1- 10 211 706
- DE-A1-102005 002 221

## Beschreibung

Die Erfindung betrifft eine landwirtschaftliche Erntemaschine mit einer um eine vertikale Drehachse und eine horizontale Drehachse verschwenkbare Überladeeinrichtung großer Länge nach dem Oberbegriff des Anspruchs 1.

Selbstfahrende Erntemaschinen wie beispielsweise Feldhäcksler, Mähdrescher, Zuckerrohr-Erntemaschinen und dergl. weisen üblicherweise eine Überladeeinrichtung, z.B. einen Auswurfkrümmer, ein Korntankentleerungsrohr, eine Förderkette oder ein Förderband auf. Mittel dieser Überladeeinrichtung wird das Erntegut auf ein nebenstehendes oder nebenfahrendes Transportfahrzeug überladen. Dabei ragt in der Regel die Überladeeinrichtung seitlich aus der Kontour der Erntemaschine heraus. Während des Erntebetriebs auf dem Feld ist dies kein Problem. Bei der Fahrt auf öffentlichen Straßen ist jedoch das seitliche Überstehen der Überladeeinrichtung aus Sicherheitsgründen untersagt, so dass die Überladeeinrichtung für die Straßenfahrt in eine Straßenfahrtposition gebracht werden muss, in der die Überladeeinrichtung in der Regel nach hinten verschwenkt wird. Um die zulässigen Höhen einzuhalten, muss die Überladeeinrichtung außerdem nach unten verschwenkt werden, so dass üblicherweise die Erntemaschinen im hinteren Bereich eine Ablageeinrichtung aufweisen, beispielsweise einen Ablagebügel, auf dem die Überladeeinrichtung in der Straßenbetriebsposition abgelegt wird. Aufgrund des Wandels zu immer größeren Bearbeitungsflächen werden zunehmend immer leistungsstärkere Erntemaschinen verwendet, welche mit gleichfalls zunehmend breiteren Erntevorsätzen ausgestattet sind. Dies bedingt auch eine den breiteren Erntevorsätzen angepasste Verlängerung der Überladeeinrichtung:, um ein sicheres Überladen des Erntegutes auf das Transportfahrzeug zu gewährleisten, Dies erfordert jedoch gleichfalls die Schaffung von geeigneten Ablagemöglichkeiten der Überladeeinrichtung für den Straßentransport. Aus der DE 102 11 706 A1 ist bekannt geworden, die Überladeeinrichtung aus zwei Elementen aufzubauen, wobei ein erstes Element mit der Erntemaschine verbunden ist und ein zweites Element, welches das auslassseitige Ende der Überladeeinrichtung umfasst und während des Erntebetriebes relativ zum ersten Element in axialer Richtung teleskopierbar ist, so dass auf diese Weise die Länge der Überladeeinrichtung veränderbar ist. Nachteilig an dieser Ausführungsform ist jedoch einerseits der zu betreibende hohe technische Aufwand, anderseits ist der teleskopierbare Bereich auf ebene gleichgeformte Elemente der Überladeeinrichtung begrenzt.

Eine weitere Möglichkeit könnte darin bestehen solche große Längen aufweisende Überladeeinrichtungen für den Straßentransport teilweise oder komplett abzunehmen, was jedoch bei jedem Wechsel von einer Straßenbetriebsposition in eine Transportbetriebsposition einen großen Aufwand an Umbauarbeiten bedeutet und für den Transport der Überladeeinrichtung eventuell ein eigener Transportwagen nötig wäre. Aus der EP 1 468 598 A2 ist ein selbstfahrender Feldhäcksler mit einer auf einem Fahrgestell angeordneten Fahrerkabine und einem aufsteigenden Auswurfschacht bekannt, der sich von einer Häckseltrommel innerhalb des Fahrgestells bis oberhalb des Fahrgestells erstreckt. Der Feldhäcksler weist ein Erntevorsatzgerät mit klappbaren Seitenteilen auf. Die Fahrerkabine ist von einer Straßenbetriebposition in eine Häckselbetriebsposition und umgekehrt verschwenkbar. Für den Straßenbetrieb wird die Überladeeinrichtung des Feldhäckslers in den Bereich des Erntevorsatzes geschwenkt. So kann der Feldhäcksler in zwei Fahrtrichtungen betrieben werden, um sowohl bei Straßenbetrieb als auch bei Häckselbetrieb eine freie Sicht in die jeweilige Fahrtrichtung zu haben. Für Überladeeinrichtungen mit großer Länge bietet das Konzept keine Lösung.

Es ist daher Aufgabe der Erfindung, die Nachteile des zitierten Standes der Technik zu vermeiden und eine sichere Transportposition für Überladeeinrichtungen großer Länge zu gewährleisten, ohne dass Umbauarbeiten vorgenommen oder ein hoher technischer Aufwand betrieben werden muss.

Diese Aufgabe wird erfindungsgemäß durch die kennzeichnenden Merkmale des Patentanspruchs 1 gelöst, während in den weiteren Patentansprüchen Merkmale aufgeführt sind, die diese Lösung in vorteilhafter Weise weiterentwickeln.

Indem sich die Überladeeinrichtung im Transportbetrieb im Bereich eines von der landwirtschaftlichen Erntemaschine mitgeführten Arbeitsaggregates befindet, kann vorteilhaft der Bereich des mitgeführten Arbeitsaggregates als Ablagebereich genutzt werden, so dass sichergestellt ist, dass auch große Längen aufweisende Überladeeinrichtungen im Transportbetrieb ohne Demontage sicher transportiert werden können.

Dabei wird die Überladeeinrichtung im Transportbetrieb auf dem als Erntevorsatzgerät ausgeführten, gezogenen Arbeitsaggregat abgestützt, so dass vorteilhaft das Gewicht der Überladeeinrichtung von dem Erntevorsatzgerät aufgenommen und eine Entlastung des Sockels der Überladeeinrichtung erreicht werden kann. Dabei ist dem Erntevorsatzgerät eine Ablagevorrichtung zugeordnet.

Indem die Überladeeinrichtung im Transportbetrieb von der Abstützvorrichtung fixiert wird, ist sichergestellt, dass ein ungewolltes Verschwenken der Überladeeinrichtung beim Durchfahren von Kurven oder Bodenunebenheiten im Transportbetrieb unterbleibt. Zudem ist dadurch eine Entlastung des Fahrers der landwirtschaftlichen Erntemaschine im Transportbetrieb erreichbar, indem er seine Konzentration auf das Steuern der Erntemaschine beschränken kann, ohne ein Verschwenken der Überladeeinrichtung aus dessen Transportposition befürchten zu müssen,

Dadurch, dass die Fixierung im Bereich zwischen den verklappten Seitenteilen des Erntevorsatzgerätes erfolgt, kann einerseits der sich dort befindende Freiraum zum Abstützen der Überladeeinrichtung genutzt werden, Andererseits ist selbst im Falle, dass sich die Überladeeinrichtung aus ihrer Fixierung löst, ein ungewolltes Verschwenken der Überladeeinrichtung über die Transportbreite der Erntemaschine hinaus vermeidbar.

Damit die Wendigkeit der landwirtschaftlichen Erntemaschine mit der auf dem Erntevorsatzgerät fixierten Überladeeinrichtung erhalten bleibt, ist in einer weiteren vorteilhaften Ausführung der Erfindung vorgesehen, dass die Fixierung derart erfolgt, dass Schwenkbewegungen der Überladeeinrichtung im Fixierungsbereich um eine horizontale und um eine vertikale Achse durchführbar sind.

Mit der Unterteilung der Überladeeinrichtung in einzelne Segmente, die angeflanscht miteinander verbunden sind ist sichergestellt, dass einerseits bereits in der Fertigung die Förderlänge der Überladeeinrichtung an die Kundenwünsche anpassbar ist und andererseits im Falle eines vorzeitigen Verschleißes nur jeweils einzelne Segmente ausgetauscht werden müssen. Zudem kann bei einem Wechsel auf Erntevorsätzen mit geringerer Länge stets eine Anpassung der Länge der Überladereinrichtung erfolgen.

Damit sichergestellt ist, dass auch Überladeeinrichtungen mit sehr großer Länge im Transportbetrieb sich im Bereich des gezogenen Erntevorsatzgerätes befinden können, ist bei einer weiteren vorteilhaften Weiterbildung der Erfindung die Überladeeinrichtung teleskopierbar ausgeführt, so dass eine eventuell notwendige Verkürzung der Überladeeinrichtung erreichbar ist.

Zur Entlastung des Fahrers der Erntemaschine ist eine Steuereinrichtung zur Steuerung der Bewegungen der Überladevorrichtung vorgesehen. Vorteilhaft sind mittels der Steuereinrichtung die Bewegungen der Überladeeinrichtung automatisch und/oder manuell steuerbar.

In einer weiteren vorteilhaften Ausgestaltung der Erfindung ist der Überladeeinrichtung eine Abstützvorrichtung zum Abstützen auf dem gezogenen Arbeitsaggregat zugeordnet, so dass sichergestellt ist, dass auch bei einem Wechsel des Arbeitsaggregates stets eine Abstützmöglichkeit für die Überladeeinrichtung vorhanden ist.

Weitere vorteilhafte Ausgestaltungen sind Gegenstand weiterer Unteransprüche und werden anhand einer Zeichnung näher erläutert.

Es zeigt:

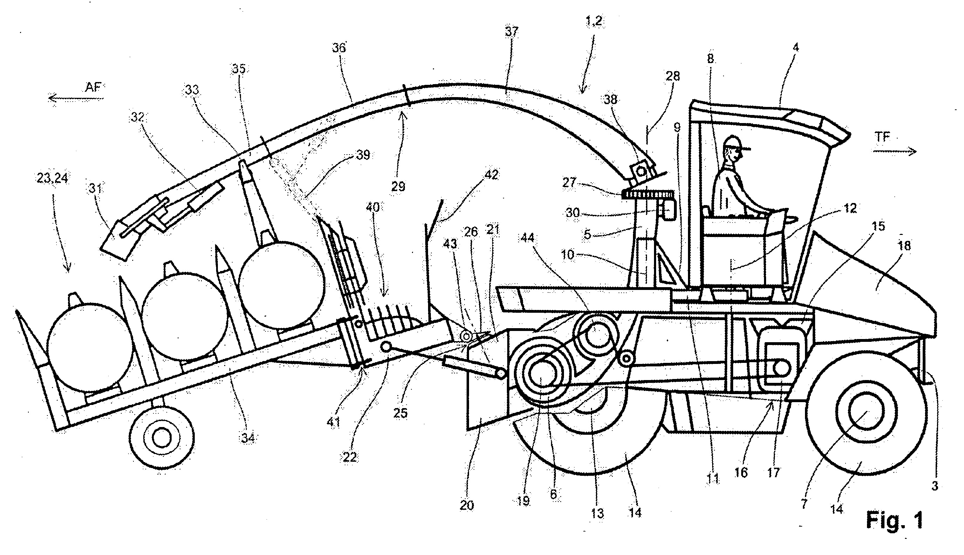

- Figur 1:: eine Seitenansicht der als Feldhäcksler ausgeführten landwirtschaftlichen Erntemaschine mit gezogenem Erntevorsatzgerät und mit einer Überladevorrichtung mit einem Teilschnitt durch die Funktionsbaugruppen

Die in Fig. 1 als selbstfahrender Feldhäcksler 1 ausgeführte landwirtschaftliche Erntemaschine 2 zeigt ein Fahrgestell 3, auf dem eine Fahrerkabine 4 angeordnet ist. Neben der Fahrerkabine 4 ist auf dem Fahrgestell 3 das obere Ende eines aufsteigenden Auswurfschachtes 5 angeordnet, der sich von einer Häckseltrommel 6 innerhalb des Fahrgestells 3 bis oberhalb des Fahrgestells 3 erstreckt. Die Fahrerkabine 4 steht in einer Straßen- bzw. Transportbetriebsposition nahezu mittig zwischen einer ersten Achseinheit 7 und dem Auswurfschacht 5, wobei die Blickrichtung des Fahrers 8 in Richtung der ersten Achseinheit 7 gerichtet ist. Die Fahrerkabine 4 ist auf einer Schwenkvorrichtung 9 angebracht, die um eine vertikale Drehachse 10 horizontal schwenkbar ist. Die Schwenkvorrichtung 9 ist als gerader Schwenkarm 11 ausgeführt, an dessen äußeren Ende die Fahrerkabine 4 um die vertikale Drehachse 12 drehbar gelagert ist. Die Drehachse 10 und die Schwenkvorrichtung 9 liegen vor dem Auswurfschacht 5, so dass beim Verschwenken der Fahrerkabine um 180° um den Auswurfschacht 5 herum weder die Fahrerkabine 4 noch die Schwenkvorrichtung 9 den Auswurfschacht 5 berühren bzw. einen Sicherheitsabstand unterschreiten. Am äußeren Ende des Schwenkarms 11 ist die Fahrerkabine 4 um eine vertikale Achse 12 drehbar gelagert. Dies ermöglicht einen vollständigen teilweise rotatorischen und teilweise translatorischen Umlauf der Fahrerkabine 4 um den Auswurfschacht 5.

Die landwirtschaftliche Erntemaschine 2 wird im Arbeitsbetrieb vorzugsweise in einer Arbeitsfahrtrichtung AF betrieben, selbstverständlich kann die landwirtschaftliche Erntemaschine 2 zum Rangieren rückwärts in die entgegengesetzte Richtung fahren.

Das Fahrgestell 3 der landwirtschaftlichen Erntemaschine 2 wird von der ersten Achseinheit 7 und einer weiteren Achseinheit 13 getragen. Dabei weist die erste Achseinheit 7 umfangsmäßig kleinere Räder 14 auf als die weitere Achseinheit 13. Im Bereich der ersten Achseinheit 7 befindet sich eine als Verbrennungsmotor 15 ausgeführte Antriebseinheit 16, ein Getriebe 17 und ein Kühlsystem 18. Der größte Anteil der Last der Antriebseinheit 16 ruht auf der ersten Achseinheit 7, wobei sich der Schwerpunkt der Antriebseinheit 16 insgesamt bedingt durch die Anordnung des Motors 15 und des Getriebes 17 in etwa auf Höhe der ersten Achseinheit 7 befindet.

Der weiteren Achseinheit 13 ist eine Funktionsbaugruppe 19 zugeordnet, welche ein Einzugsgehäuse 20 und einen darin eingefügten Einzugsschacht 21 umfasst. Dem Einzugsschacht 21 ist ein, einen Tragrahmen 22 aufweisendes, mehrteiliges als Erntevorsatzgerät 23 ausgeführtes Arbeitsaggregat 24, großer Arbeitsbreite zugeordnet. Das Erntevorsatzgerät 23 ist aus einem Basisteil 40 und über Gelenkpunkte 41 schwenkbar daran befestigte Seitenteile 34 aufgebaut. Zur Erreichung der dargestellten Transportposition ist das Basisteil 40 aus einer Arbeitsbetriebsposition um eine nahezu horizontale und quer zur Erntemaschine 2 orientierte Schwenkachse 43 in vertikaler Richtung schwenkbar angelenkt, wobei während der Schwenkbewegung die Seitenteile 34 zugleich in eine in Transportfahrtrichtung TF weisende Position verschwenkt werden. Im Wesentlichen ist das Basisteil 40 mittig vor und sich über die gesamte Breite der landwirtschaftlichen Erntemaschine 2 erstreckend, angeordnet. In der dargestellten Transportendlage sind die Seitenteile 34 dem Basisteil 40 vorgeordnet und zumindest teilweise unterhalb des Basisteils 40 angeordnet.
An dem Basisteil 40 zugeordneten Tragrahmen 22 sind obenseitig sich nahezu senkrecht nach oben erstreckend als Maiseinweiser ausgeführte Führungselemente 42 angeordnet,
Über eine Adaptiervorrichtung 25 sind das Erntevorsatzgerät 23 und das Einzugsgehäuse 20 miteinander verbunden, wobei die Adaptiervorrichtung 25 über eine horizontal gelagerte Gelenkvorrichtung 26 mit einem mit dem Erntevorsatzgerät 23 in Verbindung stehenden Tragerrahmen 22 verbunden ist und beim Verschwenken des Erntevorsatzgerätes 23 von einer Arbeits- in eine Transportbetriebsposition die Verbindung des Erntevorsatzgerätes 23 mit dem Einzugsgehäuse 20 aufrechterhält, wobei die landwirtschaftliche Erntemaschine 2 im Transportbetrieb das Erntevorsatzgerät 23 mittels der Adaptiervorrichtung 25 in eine Transportfahrtrichtung TF zieht.

In dem dem Einzugsschacht 21 nachgeordneten annähernd vertikal verlaufenden Auswurfschacht 5 befinden sich nicht dargestellte Einzugs- und Vorpresswalzen. Den Einzugs und Vorpresswalzen nachgeordnet sind eine Häckseltrommel 6, ein nicht dargestellter Corn-Cracker sowie ein Nachbeschleuniger 44, die mittels der Antriebseinheit 19 angetrieben werden.
Auf dem Auswurfschacht 5 ist eine mit einem Drehkranz 27 um eine vertikale Drehachse 28 drehbare Überladeeinrichtung 29 angeflanscht, die zusätzlich um eine horizontale Drehachse 38 in der Höhe verstellbar ist. Zur Verschwenkung der Überladeeinrichtung 29 um die horizontale Drehachse 38 wird ein nicht dargestellter Hydraulikzylinder verwendet, Ein Hydraulikmotor 30 greift abtriebsseitig mittels eines Schneckenrades (nicht dargestellt) in den Drehkranz 27 der Überladeinrichtung 29 und dreht diese um die vertikale Achse 28, Denkbar ist, anstelle des Hydraulikmotors 30 einen Schrittmotor oder dergleichen zu verwenden. Am auswurfseitigen Ende der Überladeeinrichtung 29 befindet sich eine Auswurfklappe 31, welche über einen Hydraulikzylinder 32 verstellbar ist. Durch die Stellung der Auswurfklappe 31 kann die Wurfweite, d.h. der Abstand zwischen dem an der landwirtschaftlichen Erntemaschine 2 befindlichen, eingangseitigen Ende der Überladeeinrichtung 29 und dem Auftreffpunkt des Erntegutstroms (nicht dargestellt) auf dem Transportfahrzeug (nicht dargestellt), gesteuert werden. Wird die Auswurfklappe 31 nach unten geschwenkt, so ist die Wurfweite bei gleichbleibender Höheneinstellung der Überladeeinrichtung 29 geringer als bei einer nach oben geschwenkten Auswurfklappe 31, Aufgrund des Wandels zu immer größeren Bearbeitungsflächen werden zunehmend immer leistungsstärkere Erntemaschinen 2 verwendet, welche mit gleichfalls zunehmend breiteren Erntevorsatzgeräten 23, im Ausmaß von 10 Metern und breiter, ausgestattet sind. Dies bedingt auch eine den breiteren Erntevorsatzgeräten 23 angepasste Verlängerung der Überladeeinrichtung 29, um ein sicheres Überladen des Erntegutes auf das Transportfahrzeug zu gewährleisten. Dies erfordert jedoch gleichfalls die Schaffung von geeigneten Ablagemöglichkeiten der Überladeeinrichtung 29 für den Transportbetrieb.

Hier setzt nun die Erfindung an. Um auch Überladeeinrichtungen 29 großer Länge sicher und die gesetzlichen Abmessungen einhaltend, transportieren zu können, befindet sich die Überladeeinrichtung 29 während des Transportbetriebes im Bereich des gezogenen Erntevorsatzgerätes 23. Im dargestellten Ausführungsbeispiel ist die Überladeeinrichtung 29 auf einer dem Erntevorsatzgerät 23 zugeordneten Ablagevorrichtung 33 abgelegt. Vorteilhaft kann dadurch einerseits ein Teil des Gewichts der Überladeeinrichtung 29 vom Erntevorsatzgerät 23 aufgenommen werden. Andererseits kann das ohnehin gezogene Erntevorsatzgerät 23 als Bereich zur Lagerung der Überladeeinrichtung 29 im Transportbetrieb genutzt werden. Zum sicheren Transport der Überladevorrichtung 29 ist im oberen Bereich der Ablagevorrichtung 33 ein nicht näher dargestelltes Fixierungselement angeordnet, um Verschwenken der Überladeeinrichtung 29 beim Durchfahren von Kurven und Bodenunebenheiten zu vermeiden. Insbesondere kann die Überladevorrichtung 29 im Bereich zwischen den vertikal nach oben verschwenkten Seitenteilen 34 des Erntevorsatzgerätes 23 fixiert sein, so dass selbst im Falle, dass sich die Überladeeinrichtung 29 aus ihrer Fixierung löst, ein ungewolltes Verschwenken der Überladeeinrichtung 29 über die Transportbreite der Erntemaschine 2 hinaus vermeidbar ist. Die Fixierung der Überladeeinrichtung 29 erfolgt dabei - hier nicht näher dargestellt - derart, dass Schwenkbewegungen der Überladeeinrichtung 29 im Fixierungsbereich um eine horizontale Drehachse (nicht näher dargestellt) und eine vertikale Drehachse (nicht näher dargestellt) durchführbar sind, so dass eine ausreichende Wendigkeit der landwirtschaftlichen Erntemaschine 2 mit der auf dem Erntevorsatzgerät 23 fixierten Überladeeinrichtung 29 gewährleistet ist. Denkbar ist, dass die dem Basisteil 40 zugeordneten als Maiseinweiser ausgeführten Führungselemente 42 als Ablagevorrichtung genutzt werden

Alternativ ist vorgesehen, dass die Überladeeinrichtung 29 in ihrer Transportbetriebsposition stützfrei über nicht näher dargestellte Stellmittel im Bereich des Erntevorsatzgerätes 23 haltbar ist, so dass insbesondere für kurze Transportfahrten auf öffentlichen Straßen eine Fixierung der Überladeeinrichtung 29 auf dem gezogenen Erntevorsatzgerät 23 unterbleiben kann und dennoch die gesetzlichen Außenmaße einhaltbar sind.

Die im Ausführungsbeispiel dargestellte Überladeeinrichtung 29 besteht aus einzelnen Segmenten 35, 36,37 die angeflanscht miteinander verbunden sind. Auf diese Weise kann die wirksame Förderlänge der Überladeeinrichtung 29 entsprechend den jeweiligen Bedingungen für die Erntegutabgabe beliebig variiert werden, insbesondere kann eine Anpassung an die Arbeitsbreite und damit eine Anpassung der Überladeeinrichtung 29 an den Aufbau der die Transportbehälter aufweisenden Transportfahrzeuge erfolgen. Zudem erfolgt im Falle des Verschleißes vorteilhaft nur der Austausch des verschlissenen Segmentes 35, 36, 37.

Erfindungsgemäß kann die Überladeeinrichtung 29 teleskopierbar ausgeführt sein, damit sichergestellt ist, dass auch Überladeeinrichtungen 29 mit sehr großer Länge im Transportbetrieb sich im Bereich des gezogenen Erntevorsatzgerätes 23 befinden können, so dass eine eventuell für den Transportbetrieb notwendige Verkürzung der Überladeeinrichtung 29 schnell erreichbar ist. Der Aufbau und die Funktionsweise einer teleskopierbaren Überladeeinrichtung 29 ist dabei in der DE 10211706 A1 offenbart, auf deren Offenbarungsgehalt hier unmittelbar Bezug genommen wird und die mithin Bestandteil der Offenbarung dieser Erfindung werden soll,

Zur Entlastung des Fahrers 8 ist der Erntemaschine 2 eine hier nicht näher dargestellte Steuereinrichtung zur Steuerung der Bewegungen der Überladevorrichtung 29 zugeordnet. Vorteilhaft sind mittels der Steuereinrichtung die Bewegungen der Überladeeinrichtung 29, beispielhaft von einer Arbeitsbetriebsposition in eine Transportbetriebsposition und umgekehrt automatisch und/oder manuell steuerbar.

Zudem ist denkbar, dass der Überladeeinrichtung 29 eine Abstützvorrichtung 39 zum Abstützen auf dem gezogenen Arbeitsaggregat 24 zugeordnet ist, so dass sichergestellt ist, dass auch bei einem Wechsel des Arbeitsaggregates 24 stets eine Abstützmöglichkeit für die Überladeeinrichtung vorhanden und ein sicherer die gesetzlichen Abmessungen einhaltender Transportbetrieb durchführbar ist, unabhängig von der Art und dem Ausmaß des Erntevorsatzgerätes 23. Im Ausführungsbeispiel erfolgt die Abstützung auf dem nahezu senkrecht nach oben verschwenkten Basisteil 40 des Erntevorsatzgerätes 23.

### Bezugszeichenliste

- 1: selbstfahrende Feldhäcksler
- 2: landwirtschaftliche Erntemaschine
- 3: Fahrgestell
- 4: Fahrerkabine
- 5: Auswurfschacht
- 6: Häckseltrommel
- 7: Achseinheit
- 8: Fahrer
- 9: Schwenkvorrichtung
- 10: vertikale Drehachse
- 11: Schwenkarm
- 12: vertikale Drehachse
- 13: weitere Achseinheit
- 14: Räder
- 15: Verbrennungsmotor
- 16: Antriebseinheit
- 17: Getriebe
- 18: Kühlsystem
- 19: Funktionsbaugruppe
- 20: Einzugsgehäuse
- 21: Einzugsschacht
- 22: Tragrahmen
- 23: Erntevorsatzgerät
- 24: Arbeitsaggregat
- 25: Adaptiervorrichtung
- 26: Gelenkvorrichtung
- 27: Drehkranz
- 28: vertikale Drehachse
- 29: Überladeeinrichtung
- 30: Hydraulikmotor

- 31: Auswurfklappe
- 32: Hydraulikzylinder
- 33: Ablagevorrichtung
- 34: Seitenteil
- 35: Segment
- 36: Segment
- 37: Segment
- 38: horizontale Drehachse
- 39: Abstützvorrichtung
- 40: Basisteil
- 41: Gelenkpunkt
- 42: Führungselement
- 43: Schwenkachse
- 44: Nachbeschleuniger

- AF: Arbeitsfahrtrichtung
- TF: Transportfahrtrichtung

## Patentansprüche

1. Landwirtschaftliche Erntemaschine (2), insbesondere ein selbstfahrender Feldhäcksler (1), mit einer daran um eine vertikale Drehachse (28) und eine horizontale Achse (38) schwenkbar angeordneten Überladeeinrichtung (29) zur Überladung von Erntegut auf ein Transportfahrzeug, die in eine Arbeitsbetriebsposition und in eine Transportbetriebsposition verschwenkbar ist und mit unterschiedlichen Arbeitsaggregaten (24), wobei zumindest ein Arbeitsaggregat (24) als verklappbares Erntevorsatzgerät (23) mit klappbaren Seitenteilen (34) ausgeführt ist, welches im Transportbetrieb von der landwirtschaftlichen Erntemaschine (2) mitführbar ist,
**dadurch gekennzeichnet,**
**dass** sich die Überladeeinrichtung (29) im Transportbetrieb im Bereich des mitgeführten und gezogenen Arbeitsaggregates (24) befindet, indem
die Überladeeinrichtung (29) auf dem als Erntevorsatzgerät (23) ausgeführten im Transportbetrieb mitgeführten Arbeitsaggregat (24) abgelegt wird, wobei
zum Ablegen der Überladeeinrichtung (29) auf dem Arbeitsaggregat (24) eine Ablagevorrichtung (33) vorhanden ist.

2. Landwirtschaftliche Erntemaschine (2) nach einem der vorhergehenden Ansprüche,
**dadurch gekennzeichnet,**
**dass** die Überladeeinrichtung (29) im Transportbetrieb von der Ablagevorrichtung (33) fixiert wird.

3. Landwirtschaftliche Erntemaschine (2) nach einem der vorhergehenden Ansprüche,
**dadurch gekennzeichnet,**
**dass** die Fixierung im Bereich zwischen den verklappten Seitenteilen (34) des Erntevorsatzgerätes (23) erfolgt.

4. Landwirtschaftliche Erntemaschine (2) nach einem der vorhergehenden Ansprüche,
**dadurch gekennzeichnet,**
**dass** die Fixierung der Überladeeinrichtung (29) derart erfolgt, dass Schwenkbewegungen der Überladeeinrichtung (29) im Fixierungsbereich um eine horizontale Drehachse und eine vertikale Drehachse durchführbar sind.

5. Landwirtschaftliche Erntemaschine (2) nach einem der vorhergehenden Ansprüche,
**dadurch gekennzeichnet,**
**dass** die Überladeeinrichtung (29) eine einstellbare Förderlänge besitzt und aus einzelnen Segmenten(35, 36, 37) zusammengesetzt ist, die in der gewünschten, wirksamen Förderlänge angeflanscht miteinander verbunden sind.

6. Landwirtschaftliche Erntemaschine (2) nach einem der vorhergehenden Ansprüche,
**dadurch gekennzeichnet,**
**dass** die Überladeeinrichtung (29) teleskopierbar ausgeführt ist.

7. Landwirtschaftliche Erntemaschine (2) nach einem der vorhergehenden Ansprüche,
**dadurch gekennzeichnet,**
**dass** die Steuerung der Bewegungen der Überladeeinrichtung (29) automatisch und/oder manuell erfolgt.

8. Landwirtschaftliche Erntemaschine (2) nach einem der vorhergehenden Ansprüche,
**dadurch gekennzeichnet,**
**dass** zur Steuerung der Bewegungen der Überladeeinrichtung (29) eine Steuereinrichtung zugeordnet ist.

9. Landwirtschaftliche Erntemaschine (2) nach einem der vorhergehenden Ansprüche,
**dadurch gekennzeichnet,**
**dass** der Überladeeinrichtung (29) eine Abstützvorrichtung (39) zum Abstützen auf dem Erntevorsatzgerät (23) zugeordnet ist.

## Claims

1. An agricultural harvester (2), in particular a self-propelled forage harvester (1), comprising a transloading device (29) for transloading crop material on to a transport vehicle, which is arranged on the harvester pivotably about a vertical axis of rotation (28) and a horizontal axis (38) and which is pivotable into a working operative position and into a transport operative position, and different working assemblies (24), wherein at least one working assembly (24) is in the form of a pivotable harvest attachment implement (23) having pivotable side portions (34) and which can be entrained in the transport mode of operation by the agricultural harvester (2),
**characterised in that**
in the transport mode of operation the transloading device (29) is disposed in the region of the entrained and drawn working assembly (24), wherein the transloading device (29) is deposited on the working assembly (24) which is in the form of a harvest attachment implement (23) and which is entrained in the transport mode of operation, wherein there is a depositing device (23) for depositing the transloading device (29) on the working assembly (24).

2. An agricultural harvester (2) according to claim 1 **characterised in that** the transloading device (29) is fixed in the transport mode of operation by the depositing device (33).

3. An agricultural harvester (2) according to one of the preceding claims **characterised in that** fixing is effected in the region between the pivoted side portion (24) of the harvest attachment implement (23).

4. An agricultural harvester (2) according to one of the preceding claims **characterised in that** fixing of the transloading device (29) is so effected that pivotal movements of the transloading device (29) can be performed in the fixing region about a horizontal axis of rotation and a vertical axis of rotation.

5. An agricultural harvester (2) according to one of the preceding claims **characterised in that** the transloading device (29) has an adjustable conveyor length and is composed of individual segments (35, 36, 37) which are flange-connected together in the desired effective conveyor length.

6. An agricultural harvester (2) according to one of the preceding claims **characterised in that** the transloading device (29) is telescopic.

7. An agricultural harvester (2) according to one of the preceding claims **characterised in that** control of the movement of the transloading device (29) is effected automatically and/or manually.

8. An agricultural harvester (2) according to one of the preceding claims **characterised in that** a control device is associated with the transloading device (29) for controlling the movements thereof.

9. An agricultural harvester (2) according to one of the preceding claims **characterised in that** associated with the transloading device (29) is a support device (39) for support on the harvest attachment implement (23).

## Revendications

1. Moissonneuse agricole (2), en particulier, une récolteuse-hacheuse automotrice (1), avec un dispositif de transbordement (29) disposé de façon pivotable autour d'un axe de rotation vertical (28) et d'un axe horizontal (38) pour le transbordement des produits récoltés sur un véhicule de transport, qui peut être basculé dans une position de fonctionnement en mode de travail et dans une position de fonctionnement en mode de transport et avec différents appareils de travail (24), dont un au moins est réalisé en tant qu'outil frontal de récolte déversable (23) avec des parties latérales rabattables (34), lequel peut être emporté dans le mode de transport par la moissonneuse agricole,
**caractérisée en ce que** le dispositif de transbordement (29) se trouve en mode de transport dans la zone de l'appareil de travail emporté et tracté (24), en déposant le dispositif de déchargement (29) sur l'appareil de travail (24) réalisé en tant qu'outil frontal de récolte (23), emporté en mode de transport, un dispositif de dépôt (33) étant disponible pour déposer le dispositif de transbordement (29) sur l'appareil de travail (24).

2. Moissonneuse agricole (2), selon l'une des revendications précédentes,
**caractérisée en ce que** le dispositif de transbordement (29) en mode de transport est fixé par le dispositif de dépôt.

3. Moissonneuse agricole (2), selon l'une des revendications précédentes,
**caractérisée en ce que** la fixation se réalise dans la zone entre les parties latérales rabattables (34) de l'outil frontal de récolte (23).

4. Moissonneuse agricole (2), selon l'une des revendications précédentes,
**caractérisée en ce que** la fixation du dispositif de transbordement (29) est réalisée de telle façon que les mouvements de basculement du dispositif de transbordement (29) dans la zone de fixation peuvent être exécutés autour d'un axe de rotation horizontal et d'un axe de rotation vertical.

5. Moissonneuse agricole (2), selon l'une des revendications précédentes,
**caractérisée en ce que** le dispositif de transbordement (29) a une longueur de transport ajustable et est composé de différents segments (35, 36, 37) qui sont reliés les uns aux autres par des brides dans la longueur de transport efficace, souhaitée.

6. Moissonneuse agricole (2), selon l'une des revendications précédentes,
**caractérisée en ce que** le dispositif de transbordement (29) est réalisé de façon télescopique.

7. Moissonneuse agricole (2), selon l'une des revendications précédentes,
**caractérisée en ce que** la commande des mouvements du dispositif de transbordement (29) se réalise automatiquement et/ou manuellement.

8. Moissonneuse agricole (2), selon l'une des revendications précédentes,
**caractérisée en ce qu'**un dispositif de commande est associé pour commander les mouvements du dispositif de transbordement (29).

9. Moissonneuse agricole (2), selon l'une des revendications précédentes,
**caractérisée en ce qu'**un dispositif de support (39) est associé au dispositif de transbordement (29) pour soutenir l'outil frontal de récolte (23).
